Europäisches Patentamt

European Patent Office

Office européen des brevets

(19)

(11) Veröffentlichungsnummer: **0 302 068**
**B1**

(12) **EUROPÄISCHE PATENTSCHRIFT**

(45) Veröffentlichungstag der Patentschrift: **18.07.90**

(51) Int. Cl.⁵: **F 16 K 15/04, F 16 K 17/196**

(21) Anmeldenummer: **87902378.6**

(22) Anmeldetag: **06.04.87**

(86) Internationale Anmeldenummer:
**PCT/DE87/00151**

(87) Internationale Veröffentlichungsnummer:
**WO 87/06318 22.10.87 Gazette 87/23**

(54) **RÜCKSCHLAGVENTIL.**

(30) Priorität: **12.04.86 DE 3612393**
**16.08.86 DE 3627865**

(43) Veröffentlichungstag der Anmeldung:
**08.02.89 Patentblatt 89/06**

(45) Bekanntmachung des Hinweises auf die
Patenterteilung:
**18.07.90 Patentblatt 90/29**

(84) Benannte Vertragsstaaten:
**AT BE CH DE FR GB IT LI LU NL SE**

(56) Entgegenhaltungen:
**BE-A- 787 893**
**DE-B-1 167 612**
**US-A-2 670 922**
**US-A-2 755 816**
**US-A-3 153 423**
**US-A-3 457 949**

**Patent Abstracts of Japan, Band 7, Nr. 9 (M-185)
(1154), 14. Januar 1983 & JP-A-57167572 (
HITACHI SEISAKUSHO K.K. ) 15 October 1982**

(73) Patentinhaber: **STEIN, Günter**
**Waihengeyerstrasse 1**
**D-8882 Lauingen (DE)**

(72) Erfinder: **STEIN, Günter**
**Waihengeyerstrasse 1**
**D-8882 Lauingen (DE)**

(74) Vertreter: **Schuster, Gregor, Dipl.-Ing. et al**
**Patentanwälte Schuster & Thul**
**Wiederholdstrasse 10**
**D-7000 Stuttgart 1 (DE)**

Courier Press, Leamington Spa, England.

## Beschreibung

### Stand der Technik

Die Erfindung geht aus von einem Rückschlagventil nach der Gattung des Hauptanspruchs. Rückschlagventile werden in vielfältiger Weise als Rückstromverhinderer eingesetzt sowie auch als Ventile, die ein Auslaufen einer Leitung in Strömungsrichtung nach Unterbrechen des Vordruckes verhindern sollen. Die in Schließrichtung am Schließglied angreifende Schließkraft kann durch eine Schließfeder oder aber bei entsprechend vertikalem Einbau des Rückschlagventils durch das Eigengewicht des Schließgliedes erzeugt werden. Maßgebend für die Schließqualität ist die Paarung Ventilglied/Ventilsitz, die dann besonders günstig ist, wenn das bewegliche Ventilglied eine kugelige Dichtfläche aufweist, die verhältnismäßig hart ist und die mit einem aus weicherem Material bestehenden kegeligen oder kantigen Ventilsitz zusammenwirkt. Der Ventilsitz kann sich dann in geringem Maße der Kugelfläche des beweglichen Ventilgliedes anpassen, so daß auch ein Verdrehen des Ventilgliedes keine Dichtanteile mit sich bringt.

Bei derartigen Rückschlagventilen ist für den Strömungsdurchgang eine Umströmbarkeit der radialen Führung erforderlich, also eine Verbindung der Bereiche stromauf und stromab der radialen Führung, die für die gesamte Länge des Öffnungshubes des beweglichen Ventilgliedes vorhanden sein muß und qas verhältnismäßig viel Bauraum, insbesondere im Durchmesser des Rückschlagventils erfordert.

Bei einem bekannten Rückschlagventil der gattungsgemäßen Art (US—PS 3 457 949) schließt an die kugelige Dichtfläche des Beweglichen Ventilglieds eine topfförmige Ausbildung größeren Durchmessers des Ventilgliedes an, die radiale Anschliffe für den Strömungsdurchgang aufweist und an deren Boden sich eine Schließfeder abstützt. Der größere Durchmesser der topfförmigen Ausbildung, der größer ist als der doppelte Radius der kugeligen Dichtfläche, bewirkt entsprechend einen größeren Gesamtdurchmesser des Rückschlagventils.

### Aufgabe der Erfindung

Der Erfindung liegt die Aufgabe zugrunde, ein gattungsgemäßes Rückschlagventil zu entwikkeln, bei dem der Gesamtdurchmesser möglichst klein ist und die, bei der Führung des Ventilgliedes entstehende, Reibung minimiert ist.

### Vorteile der Erfindung

Daß diese Aufgabe lösende erfindungsgemäße Rückschlagventil mit den kennzeichnenden Merkmalen des Hauptanspruchs hat demgegenüber den Vorteil, daß das bewegliche Ventilglied radial und reibungsarm geführt ist, und daß bei Erhaltung der Vorteile eines Kugelrückschlagventils der Medienfluß über die Ausnehmungen strömen kann bei einem Minimum der Außenabmessungen des Ventils. Aufgrund der radialen Führung bewirkt der Medienstrom zudem eine Seblstzentrierung des Ventilgliedes bezüglich seiner, dem Ventilsitz zugewandten Kugelfläche, so daß eine gute Dichtheit des Rückschlagventils gewährleistet ist aufgrund der eingelaufenen Paarung von Ventilsitz und Ventilglied. Vorteilhafterweise kann ein erfindungsgemäße Rückschlagventil, bei einem Minimum an Bauraum, in auch anderen Zwecken dienende Gehäuse eingebaut werden, beispielsweise durch Aufbohren eines vorhandenen Kanals zu der als Strömungsdurchgang dienenden Bohrung. Die genannte Paarung kann auch durch unterschiedliche Stoffkombinationen beeinflußt werden, beispielsweise ein Gehäuse mit Ventilsitz aus Kunststoff und einem beweglichen Ventilglied aus Metall insbesondere Stahl und umgekehrt einem Metallgehäuse und einer Kunststoffkugel.

Nach einer vorteilhaften Ausgestaltung der Erfindung sind die im Ventilglied vorhandenen Ausnehmungen zentralsymmetrisch angeordnet, so daß das Ventilglied durch den Medienfluß eine Selbstzentrierung erhält und eine, neben der radialen Führung, zusätzliche axiale Führung des Ventilgliedes nicht erforderlich ist.

Nach einer weiteren vorteilhaften Ausgestaltung der Erfindung ist das Ventilglied durch eine Schließfeder belastbar, die an einer quer zur Öffnungsrichtung verlaufenden Fläche des Ventilgliedes angreift. Diese Fläche kann in unterschiedlicher Art angeordnet sein, wobei es vorteilhaft ist, wenn sie möglichst dicht an der eigentlichen Dichtfläche des Rückschlagventils ist, um dadurch eine möglichst lange Schließfeder und damit einen entsprechend langen Hub des beweglichen Ventilglieds zu ermöglichen. Die Schließfeder kann als Drahtfeder (Schraubenfeder) ausgebildet sein, aber auch als elastischer Block oder Blattfeder. Ein Teil der Gänge kann aus Führungsgründen als Block ausgebildet sein.

Nach einer weiteren vorteilhaften Ausgestaltung der Erfindung ist in der kugeligen Fläche, auf der dem Ventilsitz zugewandten Vorderseite des Ventilgliedes, quer zur Strömungsrichtung und im Bereich zwischen Ventilsitz und Führung eine Ringnut vorhanden, von der die dem Medienfluß dienenden Ausnehmungen ausgehen. Eine solche Ringnut verringert nicht nur das Gewicht des beweglichen Ventilgliedes, ohne deshalb einen nachteiligen Einfluß auf die radiale Führung zu haben, sondern sie dient gleichzeitig zur Medienleitung.

Nach einer weiteren vorteilhaften Ausgestaltung der Erfindung ist im Ventilglied auf der dem Ventilsitz abgewandten Seite eine Sacköffnung vorhanden, die ebenfalls zur Gewichtsverminderung des Ventilgliedes beiträgt und deren Bodenfläche der Schließfeder zur Auflage dienen kann. Außerdem können in diese Sacköffnung Kanäle münden, die als Ausnehmungen dienen. Dadurch, daß die Schließfeder mindestens teilweise von dieser Sackbohrung aufgenommen wird, kann auch die gesamte Federlänge vergrößert werden mit dem obengenannten Vorteil, eine verhältnismäßig geringe Längsabmessung des Ventils zu erhalten. Hierbei kann erfindungsgemäß die Feder auch so ausgebildet sein, daß der in die Sackbohrung tauchende Abschnitt der Feder als Federblock ausgebildet ist, um dadurch eine zusätzliche Axialführung zu erhalten. Erfindungsgemäß kann auch die Ventilgliedrückseite zusätzlich abgeflacht sein, im Extremfall bis zur Bodenfläche der Sacköffnung.

Erfindungsgemäß können die für den Medienfluß, das heißt für den Strömungsdurchgang vom Bereich der Bohrung stromauf der radialen Führung, bis zu jenem stromab der Führung befindlichen Bereich, vorhandenen Ausnehmungen unterschiedlich gestaltet sein. Es muß jeweils nur eine radiale Führung des beweglichen Ventilgliedes erhalten bleiben. So können erfindungsgemäß als Ausnehmungen Verbindungskanäle dienen, die die beiden Bereiche verbinden, indem sie von der obengenannten Sacköffnungen zu der obengenannten Ringnut des Ventilgliedes führen, ohne daß dadurch die Kugelige Form im Dichtbereich bzw. Führungsbereich beeinträchtigt ist. Die Ausnehmungen können aber auch in der Mantelfläche der kugeligen Form vorhanden sein, wobei im Grenzfall, also bei erheblichen Ausnehmungen, nur noch Stege für die radiale Führung und eine Kugelkalotte für die Dichtstelle verbleiben.

Nach einer zusätzlichen vorteilhaften Ausgestaltung der Erfindung kann das Rückschlagventil als Doppelrückschlagventil ausgebildet sein, mit einem ersten, in nur einer Strömungsrichtung wirkenden Ventilglied und mit einem zweiten, in entgegengesetzter Strömungsrichtung wirkenden Ventilglied. Auf diese Weise ist zwar eine Leitungsunterbrechung bei niederen Drücken gegeben, zum Beispiel, um ein Auslaufen einer Leitung zu verhindern, es ist aber andererseits in beiden Richtungenn der Durchstrom gewährleistet.

Vorteilhafterweise kann das zweite bewegliche Ventilglied erfindungsgemäß in einer zentralen Bohrung des ersten beweglichen Ventilgliedes angeordnet sein, die als entsprechender Strömungsdurchgang für die andere Strömungsrichtung dient. Hierdurch wird die ohnehin gegebene Mindestabmessung eines kugeligen Ventilgliedes genutzt, um ein weiteres Rückschlagventil unterzubringen, ohne daß deshalb der Durchmesser vergrößert werden muß. Hierbei kann die zentrale Bohrung als Stufenbohrung ausgebildet sein, deren Stufenkante als Ventilsitz dient. Da der Medienfluß bei dieser Ausgestaltung nur in der einen oder der anderen Richtung gehen kann, kann sich erfindungsgemäß, ohne Änderung auf die tatsächliche Öffnungskraft, die Schraubenfeder des zweiten Ventilglieds an einer Schulter des Ventilgehäuses des ersten Ventilgliedes abstützen, da das zweite Ventilglied nur dann öffnet, wenn das erste Ventilglied geschlossen ist. Dies hat vor allem eine konstruktive Vereinfachung zur Folge.

Nach einer weiteren vorteilhaften Ausgestaltung der Erfindung wird das erfindungsgemäße Rückschlagventil in einer Krafstoffeinspritzanlage für Brennkraftmaschinen verwendet und dort insbesondere als Druckentlastungsventil. Bei Krafstoffeinspritzanlagen treten hohe Frequenzen und damit sehr kurze Schaltzeiten bei gleichzeitig hohen Drücken auf, wobei außerdem das Rückschlagventil dicht schließen muß, da Leckmengen zu einer erheblichen Störung der Gleichverteilung führen können. Bei dem Einsatz als Druckentlastungsventil können die Ausnehmungen so gewählt werden, daß diese beim Schließvorgang einen Drosseleffekt bewirken, der hin bis zu der sogenannten Kraftstoffangleichung einsetzbar ist.

Natürlich sind die erfindungsgemäßen Rückschlagventile auch als Druckhalteventile einsetzbar, also für solche Fälle, bei denen die druckbeaufschlagte Fläche und die Federkraft die entscheidenden Steuergrößen darstellen. Dadurch, daß erfindungsgemäß grundsätzlich eine Kugelkalotte als Dichtfläche des beweglichen Ventilgliedes dient und auch die Führung durch die kugelige Ausbildung in diesem Bereich des Ventilgliedes nur linienförmig ist, ergeben sich für die Konstruktion gut beherrschbare Kenngrößen. Natürlich kann ein erfindungsgemäßes Ventilglied außer aus einer Kugel auch aus einem sonstig geformten Rohling gewonnen werden, wobei jedoch grundsätzlich die Dichtfläche als Kugelkalotte und die radiale Führung ebenfalls gewölbt ausgebildet sein muß.

Nach einer weiteren vorteilhaften Ausgestaltung der Erfindung wirkt das bewegliche Ventilglied mit einer seine Öffnungs- und/oder Schließbewegung dämpfenden Einrichtung zusammen. Eine derartige Dämpfungseinrichtung kann bei manchen Anwendungseinsätzen wünschenswert sein, da es sich bei dem erfindungsgemäßen Rückschlagventil von Hause aus um ein schnell öffnendes und schließendes Ventil handelt, bei dem ein Minimum an Reibungskräften mit großen Steuerflächen und möglicherweise verhältnismäßig niederen Federkräften vorhanden ist. Erfindungsgemäßen kann als Dampfungseinrichtung ein Raum dienen, dessen Volumen sich bei der Bewegung des beweglichen Ventilgliedes ändert und der zudem eine Drosselöffnung aufweist, wobei als Raum eine in Bewegungsrichtung des Ventilgliedes verlaufende zylindrische Sackbohrung dienen kann, in die ein Dämpfungskolben taucht und wobei die zylindrische Bohrung oder der Dämpfungskolben am beweglichen Ventilglied angeordnet ist. So kann beispielsweise ein am beweglichen Ventilglied angeordneter Zapfen als Dämpfungskolben dienen.

Nach einer vorteilhaften Ausgestaltung dieser Dämpfungseinrichtung können Teile derselben, wie beispielsweise ein Nippel, der die Sackbohrung oder den Dämpfungskolben aufweist, als den Öffnungshub des beweglichen Ventilgliedes begrenzender Anschlag dienen. Ein solcher Anschlag kann natürlich auch durch den Boden der Sackbohrung oder die Stirnseite des Zapfens bzw. des Dämpfungskolbens gebildet sein.

Nach einer weiteren vorteilhaften Ausgestaltung der Erfindung ist die Ausnehmung als schräger Anschliff ausgebildet, so daß der Durchgangsquerschnitt zwischen Ventilglied und Gehäuse weitgehend konstant gehalten werden kann. Außer dieser spanabhebenden Bearbeitung des Ventilgliedes können erfindungsgemäß die Ausnehmungen auch durch elektroerosive Bearbeitung gewonnen werden, beispielsweise indem in eine vorhandene, bereits gehärtete Kugel elektroerosive die gewünschten Ausnehmungen so angebracht werden, daß lediglich die Kugelkalotte auf der Dichtseite und Abschnitte der Kugelflächen für die radiale Führung in der Bohrung verbleiben. Hierdurch ist es besonders wirtschaftlich möglich, das erfindungsgemäße Ventilglied aus in Großserien produzierten und eine ausgezeichnete Oberfläche aufweisenden Kugeln herzustellen.

Weitere Vorteile und vorteilhafte Ausgestaltungen der Erfindung sind der nachfolgenden Beschreibung, den Ansprüchen und der Zeichnung entnehmbar.

Zeichnung

Mehrere Ausführungsbeispiele des Gegenstandes der Erfindung sind in der Zeichnung dargestellt und im folgenden näher beschrieben. Es zeigen

Fig. 1 und 2 das erste Ausführungsbeispiel im Längs- und Querschnitt;

Fig. 3 und 4 das zweite und dritte Ausführungsbeispiel im Längsschnitt;

Fig. 5 und 6 das vierte Ausführungsbeispiel im Längs- und Querschnitt;

Fig. 7 das fünfte Ausführungsbeispiel im Querschnitt;

Fig. 8 das sechste Ausführungsbeispiel als zwei Rückschlagventile mit einer Feder;

Fig. 9 das siebente Ausführungsbeispiel in Form eines Doppelrückschlagventils;

Fig. 10 das in Fig. 1 dargestellte erste Ausführungsbeispiel mit einer Dämpfungsvorrichtung als Variante und

Fig. 11 das achte Ausführungsbeispiel sowie eine weitere Variante einer Dämpfungseinrichtung.

Beschreibung der Ausführungsbeispiele

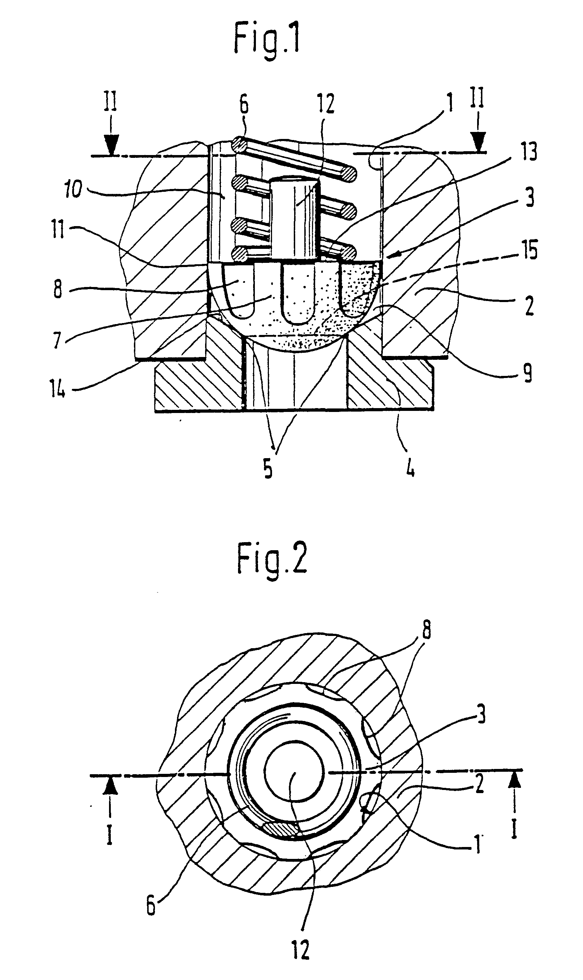

Bei dem in Fig. 1 und 2 dargestellten ersten Ausführungsbeispiel ist in einer zentralen Bohrung 1 eines Ventilgehäuses 2 ein bewegliches Ventilglied 3 radial geführt und axial beweglich angeordnet. Zum Ventilgehäuse 2 gehört ein eingesetzter Ring 4, an dem das Ventilglied 3 anliegt und der einen Ventilsitz 5 aufweist. Das Ventilglied 3 ist durch eine Schließfeder 6 zum Ventilsitz 5 hin belastet.

Das bewegliche Ventilglied 3 weist auf der dem Ventilsitz 5 zugewandten Seite eine kugelige Fläche (Kugelfläche) 7 auf, die in Hinsicht auf die Strömungsrichtung radiale Ausnehmungen in Form von Abflachungen 8 für den Medienstrom hat. Sobald das Ventilglied 3 vom Sitz 5 abhebt, kann innerhalb der Bohrung 1 das Medium aus dem Bereich 9 über die Abflachungen 8 in den Bereich 10 strömen, wobei der zwischen den Abflachungen 8 verbleibende Bereich der Kugelfläche als Führung 11 in der Bohrung 1 dient. Auf der dem Ventilsitz 5 abgewandten Seite des Ventilgliedes 3 ist ein Zapfen 12 vorhanden und eine quer zur Strömungsrichtung verlaufende Fläche 13, an der sich die Schließfeder 6 abstütz. Die Schließfeder ist hier als Drahtschraube ausgebildet, sie kann jedoch genauso gut als elastischer Zylinder oder Kegelfeder oder sonstwie ausgebildet sein.

Obwohl der Ring 4 auf der dem Ventilglied 3 zugewandten Seite eine kegelige Fläche 14 aufweist, ist die tatsächliche Dichtung eine Linie 15. Diese Linie 15 liegt in jedem Fall innerhalb dem Bereich der Kugelfläche 7, in dem keine Ausnehmungen vorhanden sind, so daß eine Überschneidung mit den Abflachungen 8 nicht auftreten kann.

Speziell bei diesem ersten Ausführungsbeispiel ist das bewegliche Ventilglied 3 aus einer Kugel herausgearbeitet, indem durch entsprechende Bearbeitung, also das Anordnen von Ausnehmungen, der Zapfen 12 die Fläche 13 und die Abflachungen 8 gewonnen werden. Als Kugel kann vorzugsweise eine in Großserien hergestellte Metallkugel dienen, bei der dann die Bearbeitung beispielsweise über ein elektroerosives Verfahren erfolgt, bei dem die verbleibende Kugelfläche in ihrer Qualität, also Härte und Glätte, unbeeinträchigt bleibt. Diese Qualität der Kugelfläche 7 ist allerdings maßgehend für die Dichtqualität am Ventilsitz 5 sowie die Qualität der Führung 11.

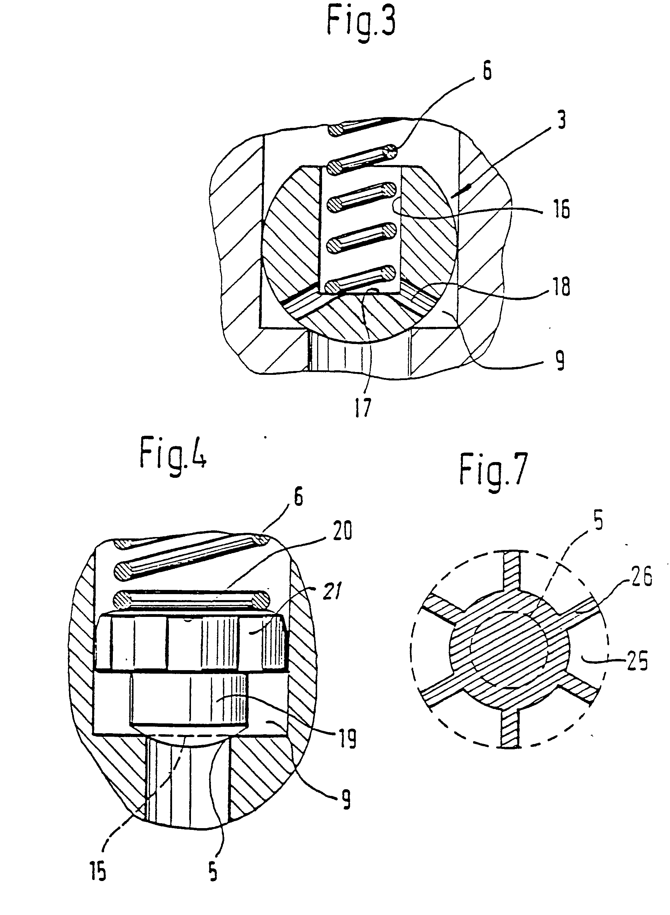

In Fig. 3 ist das zweite Ausführungsbeispiel dargestellt, bei dem das Ventilgehäuse und der Ventilsitz stark vereinfacht dargestellt sind, um die Einzelheiten des im Längsschnitt dargestellten Ventilgliedes 3 zu verdeutlichen. Auch bei diesem Ausführungsbeispiel ist das bewegliche Ventilglied aus einer Kugel gefertigt und erfindungsgemäß durch die kugelige Fläche radial geführt. Darüberhinaus weist das bewegliche Ventilglied eine Sackbohrung 16 auf, an deren Bodenfläche 17 sich die Schließfeder 6 abstützt und wobei in Bezug auf die Strömungsrichtung schräg verlaufende Verbindungskanäle 18 im Ventilglied vorhanden sind, die den Bereich 9 mit der Sackbohrung 16 verbinden. Sobald das bewegliche Ventilglied 3 vom Sitz abhebt, kann das nachströmende Medium aus dem Bereich 9 über die Verbindungskanäle 18 in die Sackbohrung 16 und von dort vom Rückschlagventil ungesteuert weiterströmen.

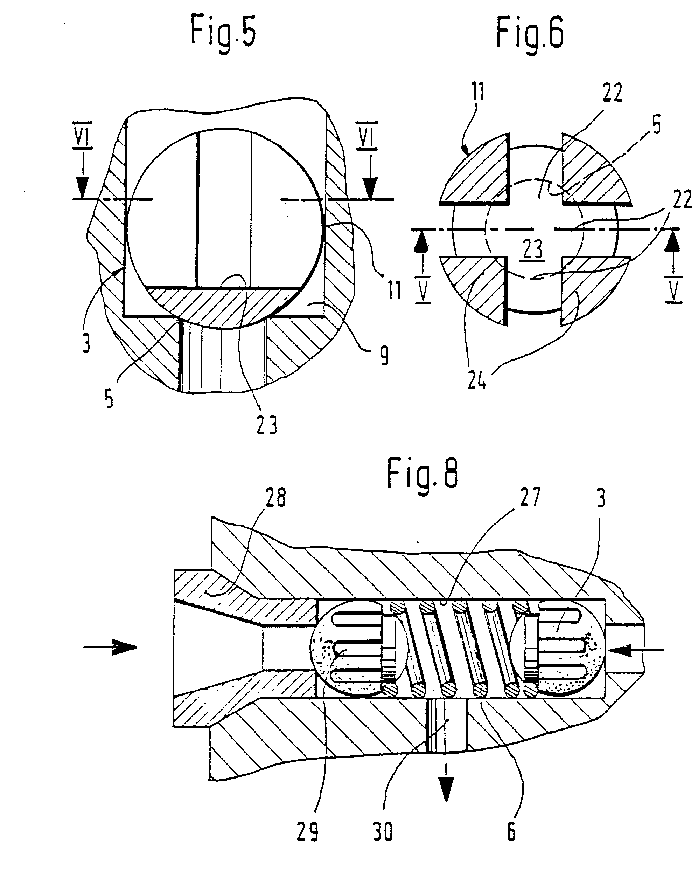

Bei dem in Fig. 4 dargestellten dritten Ausführungsbeispiel ist in der Kugelfläche stromab des Ventilsitzes 5 eine Ringnut 19 vorgesehen, die einerseits eine Verringerung des Gewichts des beweglichen Ventilgliedes bewirkt und andererseits eine Verbesserung der Strömungsanschlüsse zu den Ausnehmungen hin. Das Volumen des Bereichs 9 wird dadurch vergrößert. Als Ausnehmungen können wie beim ersten Ausführungsbeispiel Abflachungen dienen oder aber, wie beim zweiten Ausführungsbeispiel, Kanäle oder sonst irgendeine die Führung des Schließgliedes umgehende Kanalführung im Schließglied. In jedem Fall liegt jedoch die Ringnut 19 so weit entfernt von der Dichtlinie 15, daß eine Überschneidung mit dem Ventilsitz 5 unterbunden ist. Als weiteres Merkmal ist bei diesem Ausführungsbeispiel die dem Ventilsitz 5 abgewandte Seite des beweglichen Ventilgliedes abgeflacht, wodurch eine Ebene 20 entsteht, an der sich die Schließfeder 6 abstützt.

Bei dem in Fig. 5 im Längsschnitt und in Fig. 6 im Querschnitt dargestellten vierten Ausführungsbeispiel ist das bewegliche Ventilglied 3 in kugeliger Form ausgebildet, an deren Rückseite zwei tiefe sich mittig kreuzende Einschnitte 22 vorhanden sind, die über die Führung 11 hinaus in Richtung Ventilsitz 5 geführt sind. Hierdurch wird eine wesentliche Gewichtsverminderung erzielt, ohne daß deshalb die radiale Führung 11 vermindert ist. Die Schließfeder ist hier nicht dargestellt, kann aber wie bei den anderen Ausführungsbeispielen in unterschiedlichster Art ausgebildet sein. In jedem Fall kann sie sich an dem Schnittgrund 23 der tiefen Einschnitte 22 abstützen. Sie kann sich aber auch an den vier stehengebliebenen Kolonnen 24 abstützen. Je tiefer die Einschnitte 22 geführt werden, desto gröber ist der dadurch gegebene Durchflußquerschnitt vom Bereich 9 her über die Einschnitte 22.

Bei dem in Fig. 7 dargestellten fünften Ausführungsbeispiel ist das bewegliche Ventilglied ebenfalls in kugeliger Form ausgebildet, die hier im Querschnitt gezeigt ist. Grundsätzlich entspricht dieses Ausführungsbeispiel dem ersten Ausführungsbeispiel, wobei die dort beschiebenen Abflachungen hier zu tiefen Ausnehmungen 25 erweitert sind. Auf diese Weise verbleiben für die radiale Führung nur noch Stege 26. Erfindungsgemäß können diese tiefen Ausnehmungen 25 mit einer Ausbildung, wie im ersten Ausführungsbeispiel, mit einem Zapfen oder, wie beim zweiten Ausführungsbeispiel mit einer Sackbohrung kombiniert sein.

In Fig. 8 ist als sechstes Ausführungsbeispiel eine Anwendung in einer Einspritzanlage gezeigt, bei der das hier nicht näher dargestellte Ventilglied 3, das irgendeine erfindungsgemäße Ausführungsform haben kann, in einer Gehäusebohrung 27 angeordnet ist, die durch einen konischen Nippel 28 verschlossen ist, dessen Mündungskante als Ventilsitz für ein zweites Ventilglied 29 dient, an dem sich die Schließfeder 6 rückseitig abstützt. Bei einer Kraftstoffeinspritzanlage kann so der Kraftstoff von beiden Seiten her über die Ventilglieder 3 und 29 zuströmen, um dann über einen Abfluß 30 des die Feder 6 aufnehmenden Raums abströmen zu können. Natürlich ist dieses Ausführungsbeispiel nicht auf Einspritzanlagen eingeschränkt, sondern bietet bei derartigen sehr komplizierten Anlagen eine vorteilhafte Anwendungsmöglichkeit. Das Ventilglied 3 ist hier in geöffnetem Zustand gezeigt.

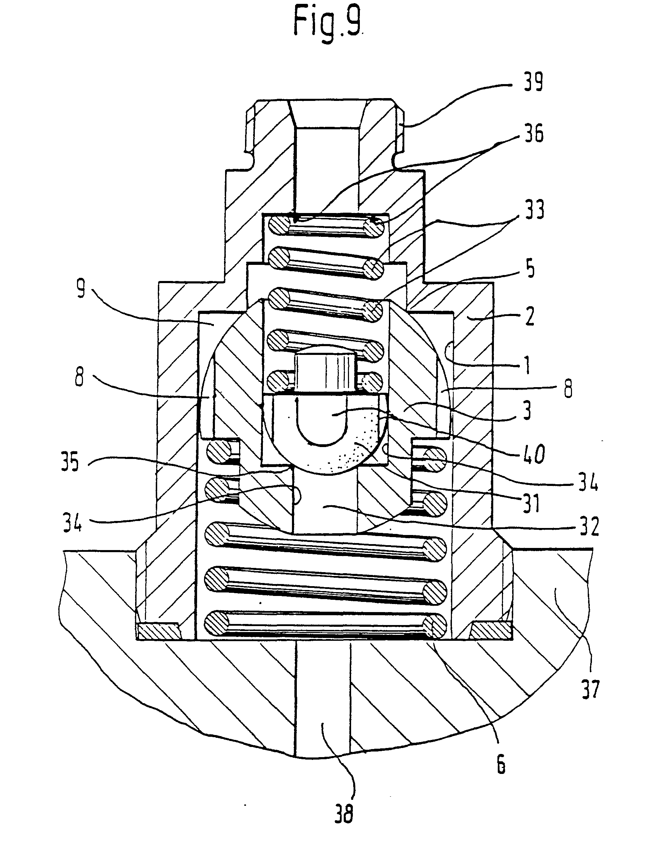

Ebenfalls besonders vorteilhaft innerhalb von Einspritzanlagen anwendbar ist das in Fig. 9 dargestellte siebente Ausführungsbeispiel in Form eines Doppelrückschlagventils. Während der grundsätzliche Aufbau der beweglichen Ventilglieder so wie bei den anderen Ausführungsbeispielen sein kann, ist hier in dem beweglichen Ventilglied 3 als erstem Ventilglied koaxial ein zweites Ventilglied 31 angeordnet, das in entgegengesetzter Richtung wie das erste öffnet, einen zweiten Strömungsdurchgang 32 innerhalb des ersten Ventilgliedes steuert und durch eine Schließfeder 33 belastet ist. Während das erste bewegliche Ventilglied 3 wie bei den anderen Ausführungsbeispielen radial in einer Bohrung 1 des Ventilgehäuses 2 geführt ist und durch eine Schließfeder 6 belastet ist, ist das zweite bewegliche Ventilglied 31 in dem Abschnitt größeren Durchmessers einer Stufenbohrung 34 radial geführt, die zentral im beweglichen Ventilglied 3 angeordnet ist und bei der die Stufenringkante 35 als Ventilsitz dient. Während dieses zweite bewegliche Ventilglied 31 grundsätzlich so aufgebaut sein kann, wie die anderen Ausführungsbeispiele ist es hier in Fig. 9 entsprechend dem ersten Ausführungsbeispiel ausgeführt. Die Schließfeder 33 dieses zweiten Ventilgliedes 31 stützt sich an einer Schulter 36 des Ventilgehäuses 2 ab. Je nach Strömungsrichtung des zu steuernden Mediums öffnet entweder das erste oder das zweite Rückschlagventil.

Für den Einsatz in Kraftstoffeinspritzanlagen kann dieses siebente Ausführungsbeispiel als Gleichdruckentlastungsventil ausgebildet sein, wobei das Gehäuse 2 als Schraubnippel ausgebildet ist, der in ein Einspritzpumpengehäuse 37 und zwar am Ende eines Druckkanals 38 schraubbar ist. An das dem Einspritzpumpengehäuse 37 angewandte Ende dieses Nippels ist an ein Gewinde 39 eine zur Einspritzdüse führende Druckleitung schraubbar. Während des unter Hochdruck stattfindenden Einspritzvorgangs strömt der Kraftstoff über das zweite Rückschlagventil 31, 32 und 35 und die Abflachungen 40 am zweiten beweglichen Ventilglied 31 zur Einspritzdüse hin. Nach Beendigung der Einspritzung wird durch den in der Druckleitung entstehenden Staudruck das erste bewegliche Ventilglied 3 so lange von dessen Ventilsitz 5 abgehoben, bis der Überdruck zum normalen Fülldruck abgebaut ist. Dieser Druckabbau erfolgt aufgrund des verhältnismäßig großen Querschnitts sehr schnell bei einem Minimum von schädlichem Raum. Sofern hier eine Art Angleichung oder zusätzliche Druckentlastung gewünscht ist, kann natürlich das erste bewegliche Ventilglied 3 mit zusätzlichen Drosselstellen versehen sein, die beispielsweise abhängig vom Hub einen unterschiedlichen Drosseleffekt haben können. Im übrigen sind die in der Einspritzung bei den sogenannten Druckventilen bekannten Kennwerte auf die Erfindung übertragbar, indem entsprechende Änderungen an der eigentlichen Erfindung, nämlich dem Kugelsitz und der kugeligen Führung von Rückschlagventilen vorgenommen werden.

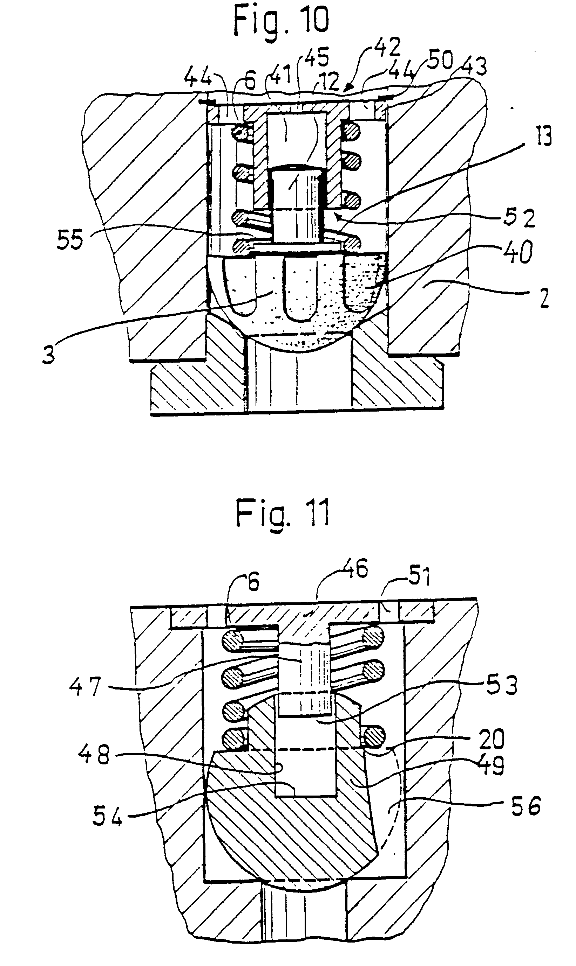

In Fig. 10 ist eine Variante des ersten Ausführungsbeispiels in Form einer Dämpfungsvorrichtung dargestellt. Der Zapfen 12 des beweglichen Ventilgliedes 3 taucht hier in eine zylindrische Sackbohrung 41 eines Nippels 42, der einen Flansch 43 aufweist. Dieser Flansch 43 ist in die zentrale Bohrung 1 des Gehäuses 2 eingelassen und ist dort durch einen Sicherungsring 50 gegen

Verschieben gesichert. Außerdem stützt sich an diesem Flansch 43 die Schließfeder 6 mit dem, dem beweglichen Ventilglied 3 abgewandten Ende ab. Als Durchfluß für das Medium dienen im Flansch 43 vorhandene Durchflußöffnungen 44.

Der Zapfen 12 ist in der zylindrischen Sackbohrung 41 radial weitgehend dichtend geführt und es ist am Boden dieser zylindrischen Sackbohrung eine Drosselbohrung 45 vorhanden mit einem definierten Querschnitt, so daß bei der Axialbewegung des Ventilgliedes 3 der Zapfen 12 in der zylindrischen Bohrung 41 wie ein Kolben wirkt, der entweder beim Öffnungshub das Medium durch die Drosselbohrung 45 nach außen verdrängt oder bei der Schließbewegung hineinsaugt. Wenn die Schließfeder 6 eine ausreichende Kraft aufweist, kann das Rückschlagventil auch unter Erzeugung eines Unterdrucks in der Sackbohrung 41 geschlossen werden, welcher sich nach dem Schließvorgang allmählich über die Drosselbohrung 45 abbaut. Umgekehrt kann natürlich auch die Schließfeder 6 so schwach ausgebildet sein, daß der Schließvorgang aufgrund des Unterdrucks verzögert wird. Statt einer Drosselbohrung 45 kann auch ein radiales Spiel zwischen dem Zapfen 12 und der Innenwand der zylindrischen Sackbohrung 41 den Drosseleffekt bewirken oder es können erfindungsgemäß in dieser Innenwand und/oder dem Zapfen Drosselkanäle vorhanden sein, die einen definierten Drosselquerschnitt bilden.

In Fig. 11 ist eine Variante des dritten in Fig. 4 dargestellten Beispiels, allerdings in Kombination mit einem weiteren Ausführungsbeispiel dargestellt. An einer gehäusefesten Grundplatte 46 ist ein Zapfen 47 vorgesehen, der in eine entsprechende Axialsackbohrung 48 des beweglichen Ventilglieds 49 ragt. Auch hier kann entweder eine nicht dargestellte separate Drosselbohrung der Sackbohrung 48 vorhanden sein oder es könne in der Mantelfläche des Zapfens 47 oder der Wandung der Sackbohrung 48 Nuten angeordnet sein, die als definierte Drosseldurchgänge dienen oder es kann der Spalt selbst den Drosseleffekt erzielen. Die Grundplatte 46 dient hier als Widerlager für die Schließfeder 6 und weist für den Mediumdurchfluß Durchgänge 51 auf.

Diese Vorrichtungen dienen außerdem als Anschlag und begrenzen damit den maximalen Öffnungshub der beweglichen Ventilglieder 3 bzw. 49. Bei der Variante nach Fig. 10 wird der Anschlag dadurch gebildet, daß die Stirnseite 52 des Nippels 42 nach Zurücklegung des Öffnungshubes des beweglichen Ventilgliedes 3 auf einen Bund 55 stößt. Bei der Variante nach Fig. 11 wird der Hub durch das Aufstoßen der Stirnseite 53 des Zapfens 47 auf den Boden 54 der Sackbohrung 48 bestimmt.

Das achte Ausführungsbeispiel ist Fig. 11 entnehmbar. Um nach Öffen des Rückschlagventils einen weitgehend konstanten Durchgangsquerschnitt zu erhalten, sind am beweglichen Ventilglied 49 als erfindungsgemäße Ausnehmung drei Anschliffe 56 vorhanden, deren Flächen sich in Strömungsrichtung dem Zapfen 47 nähern. Je weiter unten dieser Anschliff beginnt, desto größer ist aufgrund der Kugelform der radiale Durchgangsquerschnitt, so daß der nach oben sich vergrößernde Abstand zwischen Anschlifffläche und Bohrungswand eine Gesamtanpassung dieses Durchgangsquerschnitts zur Folge hat.

**Patentansprüche**

1. Rückschlagventil mit einem beweglichen Ventilglied (3), das eine kugelige mit einem Ventilsitz (5) dichtend zusammenwirkende Fläche (7) aufweist, in einem Gehäuse angeordnet ist und einen Strömungsdurchgang aufweist, wobei das Ventilglied in einer in Öffnungsrichtung verlaufenden, dem Strömungsdurchgang dienenden Bohrung radial geführt ist, wobei im Ventilglied für den Medienfluß stromab des Ventilsitzes Ausnehmungen vorhanden sind, die Bereiche stromauf und stromab der radialen Führung miteinander verbinden und wobei das bewegliche Ventilglied durch eine in Schließrichtung wirkende Kraft belastet ist, dadurch gekennzeichnet, daß das Ventilglied (3) vorzugsweise aus einer Kugel hergestellt ist, daß die kugelige Fläche (7) im Bereich der radialen Führung (11) erhalten bleibt, so daß eine linienförmige radiale Berührung zur Bohrung (1) hin besteht und daß die Ausnehmungen (8, 18) für den Medienfluß von der kugeligen Fläche (7) zwischen Ventilsitzbereich (5) und radialer Führung (11) ausgehen (insbesondere Fig. 1 und 3).

2. Rückschlagventil nach Anspruch 1, dadurch gekennzeichnet, daß zur Erhaltung der Steuerungs- und Führungslage (Zentrierung) des Ventilgliedes (3) die Ausnehmungen (8, 22, 25) zentralsymmetrisch im Ventilglied (3) angeordnet sind (Fig. 1, 6, 7).

3. Rückschlagventil nach Anspruch 1 oder 2, dadurch gekennzeichnet, daß die in Schließrichtung wirkende Kraft durch eine Schließfeder (6, 33) gebildet wird, die an einer quer zur Öffnungsrichtung verlaufenden Fläche (13, 17, 20) am Ventilglied (3, 31, 49) angreift (Fig. 1, 3, 9, 11).

4. Rückschlagventil nach einem der vorhergehenden Ansprüche, dadurch gekennzeichnet, daß ein Teil der Ausnehmungen durch eine in der kugeligen Fläche (7) quer zur Strömungsrichtung und im Bereich (9) zwischen Ventilsitz (5) und Führung (11) angeordnete Ringnut (19) gebildet wird (Fig. 4).

5. Rückschlagventil nach einem der vorhergehenden Ansprüche, dadurch gekennzeichnet, daß im Ventilglied (3, 49) auf der dem Ventilsitz (5) angewandten Seite eine Sacköffnung (16, 48) vorhanden ist (Fig. 3 und 11).

6. Rückschlagventil nach einem der vorhergehenden Ansprüche, dadurch gekennzeichnet, daß die Ausnehmungen (8, 21, 25, 56) auf dem Ventilglied (3, 49) angeordnet und offen zur Wand der Bohrung (1) hin sind (Fig. 1, 4, 7, 11).

7. Rückschlagventil nach einem der Ansprüche 1 bis 5 dadurch gekennzeichnet, daß mindestens ein Teil der Ausnehmungen (18) das Ventilglied (3) durchdringen (Fig. 3).

8. Rückschlagventil nach einem der Ansprüche 1 bis 4, dadurch gekennzeichnet, daß das Ventilglied (3) auf der dem Ventilsitz (5) angewandten Seite Einschnitte (22) aufweist, deren Schnittgrund (23) bis zum Bereich (9) stromauf der Führung (11) geht (Fig. 5 und 6).

9. Rückschlagventil nach einem der vorhergehenden Ansprüche, gekennzeichnet, durch die Ausbildung als Doppelrückschlagventil mit einem ersten (3), in einer Strömungsrichtung und einem zweiten (29, 31), in einer anderen Strömungsrichtung wirkenden Ventilglied (Fig. 8 und 9).

10. Rückschlagventil nach Anspruch 9, dadurch gekennzeichnet, daß das zweite Ventilglied (31) in entgegengesetzter Richtung öffnet wie das erste Ventilglied (3) und in einer zentralen Bohrung (34) des ersten Ventilgliedes (3) angeordnet ist, die als entsprechender Strömungsdurchgang (32) dient (Fig. 9).

11. Rückschlagventil nach einem der vorhergehenden Ansprüche, dadurch gekennzeichnet, daß das bewegliche Ventilglied (3, 49) mit einer Dämpfungseinrichtung (12, 41, 47, 48) für seine Öffnungs- und/oder Schließbewegung zusammenwirkt (Fig. 10 und 11).

12. Rückschlagventil nach einem der vorhergehenden Ansprüche, dadurch gekennzeichnet, daß das bewegliche Ventilglied aus Nichtmetall, insbesondere aus Keramik, besteht.

## Revendications

1. Clapet antiretour doté d'un clapet mobile (3), présentant un plan (7) conique, qui en combinaison avec un siège (5), pourvoit à une parfaite étanchéité, disposé dans un corps et disposant d'un passage pour l'écoulement, le clapet étant guidé radialement dans un alésage servant à l'écoulement et orienté dans le sens de l'ouverture, ce clapet présentant à l'intérieur des évidements pour l'écoulement du milieu en aval du siège du clapet, qui relient entre elles les zones situées en amont et en aval du guide radial, le clapet mobile étant chargé par une force agissant dans le sens de la fermeture, caractérisé par le fait que le clapet (3) est fabriqué de préférence dans une bille, que le plan conique (7) est maintenu dans la zone du guide radial (11) si bien qu'il y ait un contact radial linéaire vers l'alésage (1) et que les évidements (8, 18) servant à l'écoulement du milieu partent du plan conique (7) situé entre la zone du siège du clapet (5) et le guide radial (11) (Fig. 1 et 3 en particulier).

2. Clapet antiretour conformément à la prétention 1, caractérisé par le fait qui pour maintenir la position de commande et de guidage (centrage) du clapet (3), les évidements (8, 22, 25) sont disposés dans le clapet (3) symétriquement par rapport au centre (Fig. 1, 6, 7).

3. Clapet antiretour conformément à la prétention 1 ou 2, caractérisé par le fait que la force agissant dans le sens de la fermeture est constituée par un ressort de fermeture (6, 33) qui attaque sur un plan (13, 17, 20) du clapet (3, 31, 49) situé transversalement au sens de l'ouverture (Fig. 1, 3, 9, 11).

4. Clapet antiretour conformément à l'une des prétentions précédentes, caractérisé par le fait qu'une partie des évidements est formée par une rainure pour anneau antiretour (19) disposée sur le plan conique (7) transversalement au sens de l'écoulement et dans la zone (9) située entre le siège du clapet (5) et le guide (11) (Fig. 4).

5. Clapet antiretour conformément à l'une des prétentions précédentes, caractérisé par le fait que dans le clapet (3, 49), il se trouve un orifice à fond plein (16, 48) sur le côté opposé au siège du clapet (5) (Fig. 3 et 11).

6. Clapet antiretour conformément à l'une des prétentions précédentes, caractérisé par le fait que les évidements (8, 21, 25, 56) sont disposés sur le clapet (3, 49) de sorte à être ouverts en direction de la paroi de l'alésage (1) (Fig. 1, 4, 7, 11).

7. Clapet antiretour conformément à l'une des prétentions 1 à 5, caractérisé par le fait qu'au moins une partie des évidements (18) pénètrent l'élément du clapet (3) (Fig. 3).

8. Clapet antiretour conformément à l'une des prétentions 1 à 4, caractérisé par le fait que le clapet (3) présente sur le côté opposée au siège du clapet (5) des encoches (22) dont le fond de coupe (23) s'étend jusque dans la zone (9) située en amont du guide (11) (Fig. 5 et 6).

9. Clapet antiretour conformément à l'une des prétentions précédentes, caractérisé par sa configuration de clapet antiretour double avec un premier clapet (3) agissant dans un sens d'écoulement et un second (29, 31) agissant dans un autre sens d'écoulement (Fig. 8 et 9).

10. Clapet antiretour conformément à la prétention 9, caractérisé par le fait que le second clapet (31) qui ouvre dans le sens inverse du premier clapet (3), est disposé dans un alésage central (34) du premier clapet (3), qui sert de passage d'écoulement (32) (Fig. 9).

11. Clapet antiretour conformément à l'une des prétentions précédentes, caractérisé par le fait que le clapet mobile (3, 49) agit conjointment avec un dispositif d'affaiblissement (12, 41, 47, 48) pour son mouvement d'ouverture et/ou de fermeture (Fig. 10 et 11).

12. Clapet antiretour conformément à l'une des prétentions précédentes, caractérisé par le fait que le clapet mobile est en non-métal, en céramique, en particulier.

## Claims

1. Non-return valve with a moveable valve element (3) having a spherical surface (5) to seal against a valve seat (7), located in a housing providing a flow passage, whereby the valve element is guided radially within a bore that extends in the opening direction and that serves as a flow passage, whereby in the downstream direction of medium flow the valve element is provided with recesses which interconnect the upstream and downstream regions of the radial guide chamber and whereby the moveable valve element is loaded with a force acting in the valve-closing direction, characterised by the valve element (3) being preferably made from the ball, by the spherical surface (7) being retained in the region of radial guidance (11) so that lineal radial contact with the bore (1) is established and by the recesses (8, 18) for the flow of medium extending from the spherical surface (7) between the region of the valve seat (5) and the region of radial guidance (11) (particularly Figs. 1 and 3).

2. Non-return valve in accordance with Claim 1, characterised by the recesses (8, 22, 25) in the valve element (3) being centrally symmetrical in order to maintain control and guidance location (centralization) of the valve element (3) (Figs. 1, 6 and 7).

3. Non-return valve in accordance with Claims 1 or 2, characterised by the force acting in the closing direction being applied by a closing spring (6, 33) acting against a surface (13, 17, 20) at right angles to the opening direction on the valve element (3, 31, 49) (Figs. 1, 3, 9, 11).

4. Non-return valve in accordance with one of the preceding claims, characterised by the recesses in the spherical surface (7) being partly in the form of an annular groove (19) at right angles to the directon of medium flow, located between the valve seat (5) and the region of radial guidance (11) (Fig. 4).

5. Non-return valve in accordance with one of the preceding claims, characterised by there being a blind hole (16, 48) in the side of the valve element (3, 49) that faces away from the valve seat (5) (Figs. 3 and 11).

6. Non-return valve in accordance with one of the preceding claims, characterised by the recesses (8, 21, 25, 26) in the valve element (3, 49) providing openings against the wall of the bore (1) (Figs. 1, 4, 7, 11).

7. Non-return valve in accordance with one of the claims 1 to 5, characterised by at least some of the recesses (18) penetrating right through the valve element (3) (Fig. 3).

8. Non-return valve in accordance with one of the claims 1 to 4, characterised by the valve element (3) having cutout (22) in the side of the valve element that faces away from the valve seat (5), whose depth of cut (23) extends to the region (9) upstream of the guidance point (1) (Figs. 5 and 6).

9. Non-return valve in accordance with one of the preceding claims, characterised by being in the form of a double non-return valve with one valve element (3) being effective in one direction of flow and a second valve element (29, 31) being effective in another direction of flow (Figs. 8 and 9).

10. Non-return valve in accordance with Claim 9, characterised the second valve element (31) opening in the opposite direction to the first valve element (3) and being located in a central bore (34) that serves as an adequate flow passage in the first valve element (3) (Fig. 9).

11. Non-return valve in accordance with one of the preceding claims, characterised by the moveable valve element (3, 49) being provided with a damping means (12, 41, 47, 48) for its opening and/or closing movement (Figs. 10 and 11).

12. Non-return valve in accordance with one of the preceding claims, characterised by the movable valve element being of non-metal, especially of ceramic material.

# Fig.1

# Fig.2

# Fig.3

# Fig.4

# Fig.7

2

# Fig.5

# Fig.6

# Fig.8

# Fig.9

# Fig. 10

# Fig. 11